# EUROPEAN PATENT APPLICATION

(11) **EP 2 816 647 A1**
(43) Date of publication of application: **24.12.2014**
(21) Application number: 13748882.1
(22) Date of filing: 14.02.2013
(51) Int. Cl.: H01M 8/04, H01M 8/24, H01M 8/12

(54) **FUEL CELL SYSTEM**

(30) Priority: 17.02.2012 JP 2012032947
(71) Applicant: JX Nippon Oil & Energy Corporation, Chiyoda-ku Tokyo 100-8162 (JP)
(72) Inventor: YAMAMOTO, Satoru, Tokyo 100-8162 (JP); MIZUNO, Yasushi, Tokyo 100-8162 (JP)
(74) Representative: Patentanwälte Vollmann & Hemmer
(86) International application number: PCT/JP2013/053469
(87) International publication number: WO 2013/122124

(57) **Abstract**

To restrain the leakage of an exhaust gas from inside of a fuel cell module to the outside of a fuel cell system. A simplified airtight housing 4 constituting a SOFC system accommodates a fuel cell module 1, an exhaust gas processing unit 2, and a heat exchanger 3. A SOFC package 7 accommodates the housing and defines and forms an auxiliary machinery compartment 8 around the housing. The housing has an intake hole 41. A blower 17a disposed in the housing draws in air from the inside of the housing and supplies the air to air electrodes of fuel battery cells in the module through a cathode air supply passage 17. The suction of the air from the inside of the housing by the blower maintains the inside of the housing at a pressure that is lower than the pressure in the area surrounding the housing (the compartment).

## Description

### TECHNICAL FIELD

The present invention relates to a fuel cell system.

### BACKGROUND ART

Fuel cell systems have been actively developed as power generating systems with high energy use efficiency. In particular, a solid oxide fuel cell system (hereinafter referred to as the "SOFC system") has been attracting attention as a next-generation fixed power supply with low CO₂ emissions because of its high power generation efficiency.

The system is generally constituted by including fuel cells adapted to cause a hydrogen-containing fuel and air to react, thereby to generate electricity, and a casing that surrounds the fuel cells and maintains the fuel cells at a high temperature by burning therein a surplus hydrogen-containing fuel. These are the major parts of the system, and the combination of the major parts is referred to as a fuel cell module.

A hot exhaust gas is produced by combustion in the casing.

Hitherto, in a fuel cell module, to process the connection (join) with piping or wiring that penetrates the casing of the fuel cell module, a gasket (e.g., a gasket made of expanded graphite) having airtightness and resistance to high temperature has been used to secure airtightness by the fuel cell module itself. Securing the airtightness as described above makes it possible to restrain the exhaust gas from leaking from the inside of the casing to the outside when the system is operated.

Furthermore, in a step in which an outermost cover of the casing is closed after components are installed in the casing, the foregoing gasket made of expanded graphite has been used, or the cover has been welded, so as to secure the airtightness. The secured airtightness makes it possible to restrain the leakage of the exhaust gas from the inside of the casing to the outside when the system is operated.

As the techniques regarding the restraint of the leakage of an exhaust gas, the techniques described in Patent documents 1 and 2 are known.

Patent document 1 describes the use of a heat-resistant gasket made of graphite to close a cover (a metal plate).

Patent document 2 describes a fuel cell system provided with an exhaust gas suction device. The suction device draws in the exhaust gas from the inside of the casing and leads the air into a heat exchanger.

### REFERENCE DOCUMENT LIST

### PATENT DOCUMENTS

Patent document 1: Japanese Patent Application Laid-open Publication No. 2008-84590
Patent document 2: Japanese Patent Application Laid-open Publication No. 2008-311005

### SUMMARY OF THE INVENTION

### PROBLEMS TO BE SOLVED BY THE INVENTION

However, if the welding process as described above is carried out to secure the airtightness of the fuel cell module, then it is required to inspect each welded place for airtightness in the fabrication of the fuel cell module. In the inspection, the number of places to be inspected increases as the number of welded places increases, possibly leading to increased time and effort required for the inspection. This may result in an increase in the manufacturing cost.

Furthermore, if the gasket made of the expanded graphite is used to secure the airtightness of the fuel cell module as described above, then, the manufacturing cost will be inevitably higher, because the gasket made of expanded graphite is relatively costly.

Furthermore, the suction device described in Patent document 2 may draw in a large amount of water vapor contained in the exhaust gas, so that the water vapor may adversely affect the mechanical life of the suction device. As a countermeasure, if, for example, an additional device for reducing water vapor were installed, then it would add to the manufacturing cost or make the fuel cell system substantially larger.

In view of the facts described above, an object of the present invention is to restrain the leakage of an exhaust gas from a fuel cell module to the outside of the system while restraining an increase in manufacturing cost and an undue increase in the size of the system.

### MEANS FOR SOLVING THE PROBLEMS

To this end, a fuel cell system according to the present invention is constituted by including: a fuel cell module that includes fuel cells that cause a hydrogen-containing fuel and air to react, thereby to generate electricity, and a casing that surrounds the fuel cells and maintains the fuel cells in a high temperature state by burning therein a surplus hydrogen-containing fuel of the fuel cells; a first housing that accommodates the fuel cell module; and a suction device that draws in air from the inside of the first housing so as to maintain the inside of the first housing in a negative pressure state.

### EFFECTS OF THE INVENTION

According to the present invention, the suction device draws in air from the inside of the first housing so as to maintain the inside of the first housing in a negative pressure state. Thus, the pressure in the first housing is maintained to be lower than the pressure in the area surrounding the first housing, so that even if a small amount of an exhaust gas were to leak from the fuel cell module into the first housing, it is possible to restrain the small amount of the exhaust gas from flowing out of the first housing. Furthermore, an air layer is formed between the outer surface of the fuel cell module and the inner surface of the first housing, so that the surface temperature of the first housing is lower than the temperature of the outer surface of the fuel cell module. Hence, in place of the foregoing gasket made of expanded graphite, a member (e.g., a rubber grommet) that is less expensive and has lower heat resistance than the gasket can be used for the connection with the piping or wiring that penetrate the first housing.

Furthermore, according to the present invention, the suction device draws in the air from the inside of the first housing. Thus, the suction device primarily draws out relatively dry air in the first housing, making it possible to obtain a relatively favorable mechanical service life.

Therefore, the present invention permits the use of a relatively inexpensive member for the aforesaid connection and enables the suction device to have a relatively favorable mechanical service life, thus making it possible to restrain the leakage of an exhaust gas from the fuel cell module to the outside of the system while controlling a manufacturing cost at the same time.

Furthermore, according to the present invention, the suction device primarily draws in relatively dry air in the first housing, obviating the need for installing an additional device to reduce water vapor as described above to extend the life of the suction device. This makes it possible to restrain an undue increase in the size of a fuel cell system.

### BRIEF DESCRIPTION OF THE DRAWINGS

FIG. 1 is a diagram illustrating the schematic configuration of a SOFC system in a first embodiment of the present invention.
FIG. 2 is a diagram illustrating the schematic configuration of a fuel cell module.
FIG. 3 is a flowchart illustrating a method for determining a negative pressure state in a first housing.
FIG. 4 is a flowchart illustrating the control for stopping the operation of the system.
FIG. 5 is a diagram illustrating the schematic configuration of a SOFC system in a second embodiment of the present invention.
FIG. 6 is a diagram illustrating the schematic configuration of a SOFC system in a third embodiment of the present invention.
FIG. 7 is a diagram illustrating the schematic configuration of a SOFC system in a fourth embodiment of the present invention.
FIG. 8 is a diagram illustrating the schematic configuration of a SOFC system in a fifth embodiment of the present invention.
FIG. 9 is a diagram illustrating the schematic configuration of a SOFC system in a sixth embodiment of the present invention.

### MODE FOR CARRYING OUT THE INVENTION

In the following, embodiments of the present invention will be described with reference to the accompanying drawings.

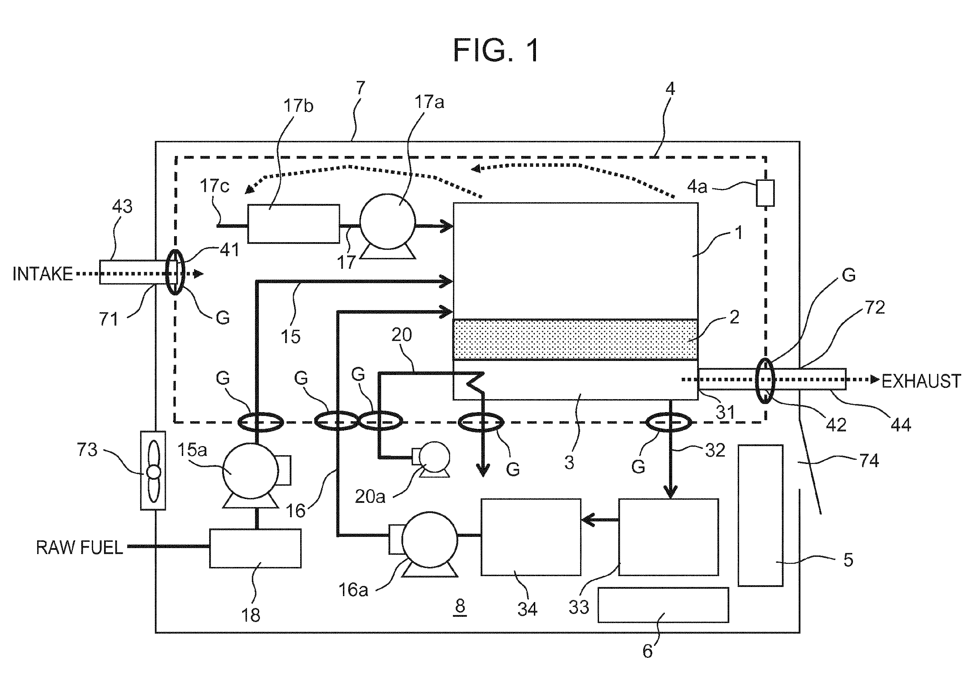

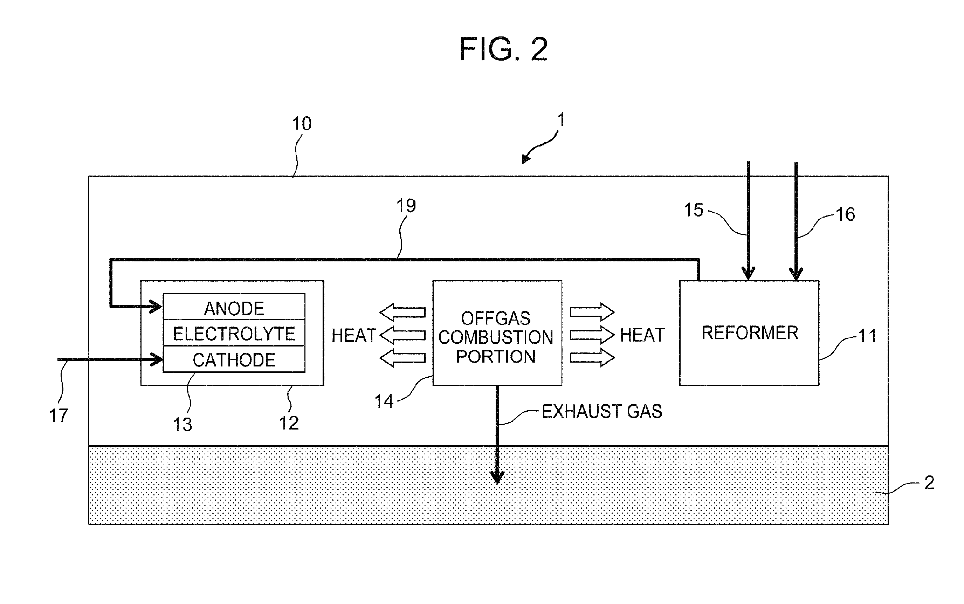

FIG. 1 illustrates the schematic configuration of a SOFC system in a first embodiment of the present invention. FIG. 2 illustrates the schematic configuration of a fuel cell module.

The SOFC system includes a fuel cell module 1 constituting a major part (power generating part) thereof, an exhaust gas processing unit 2, a heat exchanger 3, a simplified airtight housing 4, a power conditioner (hereinafter referred to as "the PCS") 5, a control unit 6, and a SOFC package 7. The exhaust gas processing unit 2 purifies the exhaust gas emitted from the fuel cell module 1. The heat exchanger 3 collects the heat of the exhaust gas, which has been purified by the exhaust gas processing unit 2, to obtain hot water. The simplified airtight housing 4 accommodates the fuel cell module 1, the exhaust gas processing unit 2, and the heat exchanger 3. The simplified airtight housing 4 corresponds to the first housing in the present invention. The PCS 5 takes out the electric power generated by the fuel cell module 1. The SOFC package 7 accommodates the simplified airtight housing 4, the PCS 5, and the control unit 6. The SOFC package 7 corresponds to a second housing in the present invention. The compartment defined and formed by the inner surface of the SOFC package 7 and the outer surface of the simplified airtight housing 4 will be referred to as an auxiliary machinery compartment 8. Thus, the PCS 5 and the control unit 6 are disposed in the auxiliary machinery compartment 8.

The simplified airtight housing 4 is shaped like a box and is formed of a metal.

The simplified airtight housing 4 has two communication holes (an intake hole 41 and an exhaust hole 42) formed to provide communication between the inside of the simplified airtight housing 4 and the outside thereof. The intake hole 41 corresponds to an intake portion of the simplified airtight housing 4 in the present invention. The intake hole 41 has a function to lead air outside the simplified airtight housing 4 into the simplified airtight housing 4.

The SOFC package 7 is shaped like a box.

The SOFC package 7 has two communication holes (an intake hole 71 and an exhaust hole 72) formed to provide communication between the inside of the SOFC package 7 and the outside thereof.

One end of an intake pipe 43 is connected in an airtight and liquid-tight manner to the intake hole 41 of the simplified airtight housing 4. A middle portion of the intake pipe 43 penetrates the intake hole 71 of the SOFC package 7. The other end of the intake pipe 43 juts out from the outer surface of the SOFC package 7. In other words, the intake pipe 43 is a communication pipe that penetrates the SOFC package 7 to provide communication between the inside of the simplified airtight housing 4 and the outside of the SOFC package 7. The intake pipe 43 also has a function for leading outside air into the simplified airtight housing 4. One end of the intake pipe 43 may be connected to the intake hole 41 of the simplified airtight housing 4, while the other end thereof may be connected to the intake hole 71 of the SOFC package 7. A sealing member for the connection (join) between the simplified airtight housing 4 and the intake pipe 43 uses, for example, a rubber grommet G.

An exhaust pipe 44 is provided such that the exhaust pipe 44 penetrates the exhaust hole 42 of the simplified airtight housing 4 and the exhaust hole 72 of the SOFC package 7.

One end of the exhaust pipe 44 is connected to an exhaust port 31 of the heat exchanger 3 in the simplified airtight housing 4. A middle portion of the exhaust pipe 44 penetrates the exhaust hole 42 of the simplified airtight housing 4 in an airtight and liquid-tight manner and further passes through the exhaust hole 72 of the SOFC package 7. The other end of the exhaust pipe 44 juts out of the outer surface of the SOFC package 7. Hence, the inside (an exhaust gas passage) of the heat exchanger 3 is in communication with the outside of the SOFC package 7 through the exhaust pipe 44. One end of the exhaust pipe 44 may be connected to the exhaust port 31 of the heat exchanger 3 in the simplified airtight housing 4, the middle portion thereof may penetrate the exhaust hole 42 of the simplified airtight housing 4, and the other end thereof may be connected to the exhaust hole 72 of the SOFC package 7. For the penetrated portion (join) of the exhaust pipe 44 in the simplified airtight housing 4, a rubber grommet G, for example, is used as the sealing member.

The SOFC package 7 is provided with a ventilation fan 73 that leads outside air into the auxiliary machinery compartment 8. The SOFC package 7 also has a ventilation hole 74 formed to exhaust air from the auxiliary machinery compartment 8. When the ventilation fan 73 is actuated to introduce outside air into the SOFC package 7, the outside air cools the PCS 5, auxiliary machines and the like (e.g., pumps 15a, 16a and the like, which will be discussed hereinafter) in the auxiliary machinery compartment 8 and then the outside air is exhausted to the outside through the ventilation hole 74.

The simplified airtight housing 4 is provided with a pressure difference sensor 4a as a pressure difference measuring unit that measures a difference in pressure ΔP between the internal pressure of the simplified airtight housing 4 and an external pressure (i.e., the internal pressure of the auxiliary machinery compartment 8). A pressure difference measurement signal from the pressure difference sensor 4a (a signal corresponding to the difference in pressure ΔP) is transmitted to the control unit 6 through a signal line, which is not illustrated. In the present embodiment, the difference in pressure ΔP means the difference between the internal pressure of the auxiliary machinery compartment 8 and the internal pressure of the simplified airtight housing 4 (i.e., ΔP = (Internal pressure of the auxiliary machinery compartment 8) - (Internal pressure of the simplified airtight housing 4)). Furthermore, in the present embodiment, the pressure difference sensor 4a is used as the pressure difference measuring unit that measures the difference in pressure ΔP; however, the construction of the pressure difference measuring unit is not limited thereto. For example, a pressure sensor that measures the internal pressure of the simplified airtight housing 4 and a pressure sensor that measures the internal pressure of the auxiliary machinery compartment 8 may be separately installed and the difference in pressure ΔP may be calculated based on the measured pressure values of these pressure sensors, thereby implementing the function as the pressure difference measuring unit.

The fuel cell module 1 in the simplified airtight housing 4 has a reformer 11, a fuel cell stack 12 (an assembly of multiple fuel battery cells 13), and an offgas combustion portion 14, which are disposed in a casing 10, as illustrated in FIG. 2. In other words, the casing 10 surrounds the reformer 11, the fuel cell stack 12, and the offgas combustion portion 14. The fuel cell stack 12 and the fuel battery cells 13 correspond to the fuel cells in the present invention.

The casing 10 is a box-shaped outer frame member formed of a heat-resistant metal. The casing 10 is preferably composed such that the inner surface thereof is lined with a heat insulating material. Furthermore, the casing 10 is disposed apart from the inner wall of the simplified airtight housing 4 to restrain heat transfer to the simplified airtight housing 4. In other words, the casing 10 is installed such that an air layer is formed between the simplified airtight housing 4 and the fuel cell module 1. The technique for the installation is, for example, a technique in which the casing 10 is installed through the intermediary of legs or a technique in which the casing 10 is installed through the intermediary of the heat exchanger 3, which has a temperature that is lower than that of the casing 10.

As illustrated in FIG. 1 and FIG. 2, a raw fuel (a hydrocarbon-based fuel or the like) supply passage 15, which extends from outside the SOFC package 7 into the casing 10, is provided.

The raw fuel supply passage 15 is composed of a pipe that penetrates through holes (not illustrated), which are formed beforehand in the SOFC package 7, the simplified airtight housing 4 and the casing 10, respectively. A sealing member, such as the rubber grommet G, is used for the penetrated portion (join) between the pipe and the simplified airtight housing 4. Furthermore, the penetrated portion (join) between the pipe and the casing 10 uses, for example, a metal pipe or a ceramic pipe (not illustrated).

As illustrated in FIG. 1, the raw fuel supply passage 15 in the auxiliary machinery compartment 8 is provided with a desulfurizer 18 and the pump 15a, serving as a controller for supplying an appropriate amount, in this order from an upstream side toward a downstream side. The desulfurizer 18 removes a sulfur compound from a raw fuel. Afor-reforming-air supply passage (not illustrated) is connected between the pump 15a and the simplified airtight housing 4 in the raw fuel supply passage 15. The for-reforming-air supply passage is provided with a blower (not illustrated), serving as a controller for supplying an appropriate amount.

As illustrated in FIG. 1 and FIG. 2, a supply passage 16 of water for steam reforming (for-reforming water), which extends from a water tank 34, which will be described hereinafter, in the auxiliary machinery compartment 8 into the casing 10, is provided. The for-reforming-water supply passage 16 in the auxiliary machinery compartment 8 is provided with the pump 16a, serving as the controller for supplying an appropriate amount.

The for-reforming-water supply passage 16 is composed of a pipe that penetrates through holes (not illustrated), which are formed beforehand in the simplified airtight housing 4 and the casing 10, respectively. A sealing member, such as the rubber grommet G, is used for the penetrated portion (join) between the pipe and the simplified airtight housing 4. Furthermore, the penetrated portion (join) between the pipe and the casing 10 uses, for example, a metal pipe or a ceramic pipe (not illustrated).

A cathode air supply passage 17, which extends from the outside of the casing 10 to the inside thereof, is provided in the simplified airtight housing 4. One end (an inlet 17c) of the cathode air supply passage 17 is positioned in the simplified airtight housing 4. Furthermore, the other end of the cathode air supply passage 17 faces the air electrodes (cathodes) of the fuel battery cells 13. The cathode air supply passage 17 is provided with a blower 17a, which is an air supply device, as a controller for supplying an appropriate amount. Furthermore, a filter 17b, which removes foreign matter from air, is provided on the upstream side of the blower 17a in the cathode air supply passage 17.

The cathode air supply passage 17 is composed of a pipe that penetrates a through hole (not illustrated) formed in the casing 10 beforehand. The penetrated portion (join) between the pipe and the casing 10 uses, for example, a metal pipe or a ceramic pipe (not illustrated).

The reformer 11 illustrated in FIG. 2 is formed by filling a chamber in a case, which is made of a heat-resistant metal, with a reforming catalyst. The supply passages 15 and 16 of a raw fuel and for-reforming water, respectively, are connected to the reformer 11. Thus, the reformer 11 reforms a raw fuel by steam reforming reaction under the presence of the steam obtained by vaporizing water and generates a hydrogen-rich fuel gas (reformed gas). The reformed gas corresponds to the hydrogen-containing fuel in the present invention. In place of the steam reforming reaction, a technique publicly known as a hydrogen generation technique, including partial oxidation reaction, autothermal reforming reaction or the like, or a combination of these reforming reactions may be used to generate the reformed gas.

The fuel cell stack 12 is an assembly composed of the multiple solid oxide type fuel battery cells 13 connected in series. Each of the cells 13 is formed by arranging a fuel electrode (anode) and an air electrode (cathode) in layers on opposite surfaces of a solid oxide electrolyte. The reformed gas is supplied to the fuel electrode through a reformed gas supply passage 19 from an outlet of the reformer 11. Air is supplied to the air electrode through the cathode air supply passage 17.

Hence, in each of the fuel battery cells 13, an electrode reaction denoted by Expression (1) given below takes place at the air electrode, while an electrode reaction denoted by Expression (2) given below takes place at the fuel electrode, thus generating electric power.

Air electrode: 1/2O₂ + 2e⁻ → O²⁻ (solid electrolyte) ... (1)

Fuel electrode: O²⁻ (solid electrolyte) + H₂ → H₂O + 2 e⁻ ... (2)

The fuel battery cells 13 are provided with a temperature sensor (not illustrated) that measures a temperature T thereof. A temperature measurement signal from the temperature sensor (a signal corresponding to the cell temperature T) is transmitted to the control unit 6 through a signal line, which is not illustrated.

The offgas combustion portion 14 is provided in the casing 10. In the offgas combustion portion 14, a surplus reformed gas (anode offgas) in the fuel cell stack 12 is burned in the presence of surplus air. The casing 10 maintains the reformer 11 and the fuel cell stack 12 in high temperature states by the combustion heat generated in the offgas combustion portion 14. Hence, the inside of the casing 10 reaches a high temperature of, for example, about 600 to about 1000°C during a power generating operation due to the power generation by the fuel cell stack 12 and the combustion of the surplus reformed gas.

Connected to the casing 10 is the exhaust gas processing unit 2, which purifies a hot exhaust gas generated by the combustion therein.

The exhaust gas processing unit 2 is composed by, for example, filling a chamber in a metal case with a combustion catalyst. The exhaust gas processing unit 2 purifies, by the combustion catalyst, components such as carbon monoxide or hydrogen contained in the exhaust gas.

As illustrated in FIG. 1, the heat exchanger 3, which carries out heat exchange between the exhaust gas that has been processed by the exhaust gas processing unit 2 and water, is connected to the exhaust gas processing unit 2.

The heat exchanger 3 collects the waste heat of the fuel cell module 1 (the heat of the exhaust gas that contains the heat generated by the fuel cell stack 12) to obtain hot water.

The heat exchanger 3 is connected to a hot-water storage tank of a hot-water supply unit (a package separate from the SOFC package 7), which is not illustrated, by a heat medium circulation passage 20. The heat medium circulation passage 20 in the auxiliary machinery compartment 8 is provided with a pump 20a, serving as a controller for supplying an appropriate amount.

The heat medium circulation passage 20 is composed of a pipe that penetrates a through hole (not illustrated) formed beforehand in the simplified airtight housing 4. The penetrated portion (join) between the pipe and the simplified airtight housing 4 uses, for example, the rubber grommet G, as the sealing member.

The moisture in the exhaust gas is condensed in the exhaust gas passage in the heat exchanger 3 by the heat exchange with the heat medium circulation passage 20. Hence, a condensed water recovering passage 32 that extends from the exhaust gas passage in the heat exchanger 3 to the outside of the simplified airtight housing 4 (into the auxiliary machinery compartment 8) is provided.

The condensed water recovering passage 32 is composed of a pipe that penetrates a through hole (not illustrated) formed beforehand in the simplified airtight housing 4. The penetrated portion (join) between the pipe and the simplified airtight housing 4 uses, for example, the rubber grommet G, as the sealing member.

The condensed water recovering passage 32 in the auxiliary machinery compartment 8 is provided with a recovered water processing unit 33. The recovered water processing unit 33 includes, for example, an ion exchange resin. Furthermore, the downstream end of the condensed water recovering passage 32 in the auxiliary machinery compartment 8 is connected to the water tank 34.

The condensed water generated by the heat exchange in the heat exchanger 3 is passed through the condensed water recovering passage 32, processed by the recovered water processing unit 33, and stored in the water tank 34.

The water stored in the water tank 34 is drawn out by the foregoing pump 16a, passed through the for-reforming-water supply passage 16 and supplied to the reformer 11.

The PCS 5 is adapted to take out DC power generated by the fuel cell stack 12 of the fuel cell module 1. The PCS 5 has an inverter to convert DC power to AC power and supplies the AC power to a household load (electric appliance), which is not illustrated. If the power generated by the fuel cell stack 12 does not satisfy the demand power of the household load, then grid power from a grid power source, which is not illustrated, is supplied to the household load to cover the shortage.

The control unit 6 is adapted to mainly control the power generated by the fuel cell stack 12 and the operation of the pump 20a for circulating the heat medium used for the heat exchange. The control unit 6 includes a microcomputer. The microcomputer includes a CPU, a ROM, a RAM, an input/output interface and the like.

The control unit 6 controls the power to be generated by controlling the amounts of the raw fuel, the for-reforming water and the for-reforming air to be supplied to the reformer 11 through the intermediary of the pumps 15a, 16a and the like, by controlling the amount of the reformed gas (an anode gas) supplied to the fuel cell stack 12, and by controlling the amount of air (a cathode gas) supplied to the fuel cell stack 12 through the intermediary of the blower 17a.

Hence, the control unit 6 sets a target value of the power to be generated by the fuel cell stack 12 within the range of a rated maximum power to be generated according to the demand power of the household load and controls the amounts of the fuel, water and air to be supplied according to the set target values (so as to obtain the target value of the power to be generated), thereby controlling the power to be generated by the fuel cell stack 12.

The control unit 6 also controls the PCS 5. Specifically, the current to be taken out of the fuel cell stack 12 is set and controlled based on the target value of the power to be generated by the fuel cell stack 12. More specifically, the target value of the power to be generated by the fuel cell stack 12 is divided by an output voltage (instantaneous value) of the fuel cell stack 12 to set the target value of current, and the current to be taken out from the fuel cell stack 12 is controlled according to the set target value of current.

When the blower 17a is actuated, the blower 17a draws in air from the inside of the simplified airtight housing 4 and supplies the air to the fuel cell stack 12 (the air electrodes of the fuel battery cells 13) in the fuel cell module 1 through the cathode air supply passage 17. This maintains the pressure inside the simplified airtight housing 4 to be lower than the pressure in the area around the simplified airtight housing 4 (the auxiliary machinery compartment 8). In other words, the blower 17a functions as the suction device in the present invention and is capable of maintaining the inside of the simplified airtight housing 4 in the negative pressure state. Thus, even if a small amount of an exhaust gas leaks into the simplified airtight housing 4 from the fuel cell module 1, it is possible to restrain the small amount of the exhaust gas from flowing out of the simplified airtight housing 4 (the auxiliary machinery compartment 8) through the intake hole 41 or the gap between the grommet G and piping. Furthermore, the small amount of the exhaust gas that leaked into the simplified airtight housing 4 is drawn in together with air by the blower 17a and led into the fuel cell module 1, and the components, such as carbon monoxide and hydrogen in the exhaust gas are purified by the exhaust gas processing unit 2. Hence, it is possible to restrain the components, such as carbon monoxide and hydrogen, in the small amount of the exhaust gas that has leaked into the simplified airtight housing 4 from being released out of the SOFC package 7 through the exhaust pipe 44.

In the present embodiment, in order to further securely restrain the exhaust gas components from being released out of the SOFC package 7, the negative pressure state in the simplified airtight housing 4 is monitored and the operation of the system is controlled according to the negative pressure state. The control unit 6 functions as the control unit in the present invention and controls the operation of the SOFC system based on the difference in pressure ΔP obtained by the pressure difference sensor 4a.

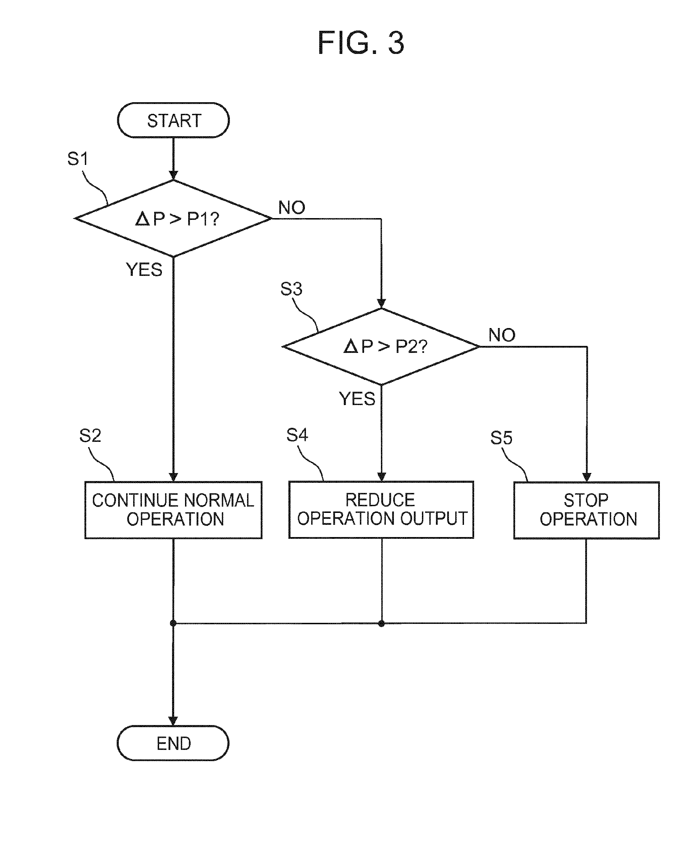

FIG. 3 is a flowchart illustrating the determination of the negative pressure state in the simplified airtight housing 4 that is carried out by the control unit 6.

The negative pressure state determination in the flowchart of FIG. 3 is carried out at predetermined time intervals while the system is in operation.

In step S1, the difference in pressure ΔP obtained by the foregoing pressure difference sensor 4a and a first predetermined difference in pressure P1 are compared. The first predetermined difference in pressure P1 denotes a threshold value for determining whether the negative pressure state in the simplified airtight housing 4 is normal or not, and is set beforehand.

If ΔP > (greater than) P1, then the control unit 6 determines that the negative pressure state in the simplified airtight housing 4 is maintained normal and proceeds to step S2 to continue a normal operation of the system. Specifically, as described above, the control unit 6 carries out the control of the power to be generated by the fuel cell stack 12 and the control of the PCS 5 according to the demand power of the household load.

On the other hand, if ΔP ≤ (less than or equal to) P1, then the control unit 6 determines that the negative pressure state in the simplified airtight housing 4 is abnormal and proceeds to step S3.

In step S3, the difference in pressure ΔP obtained by the foregoing pressure difference sensor 4a and a second predetermined difference in pressure P2 are compared. The second predetermined difference in pressure P2 denotes a threshold value for determining whether the anomaly of the negative pressure state in the simplified airtight housing 4 is minor or not, and is set beforehand. The first predetermined difference in pressure P1 and the second predetermined difference in pressure P2 are set beforehand such that a relationship denoted by 0 < (less than) P2 < (less than) P1 is satisfied.

If ΔP > (greater than) P2, then the control unit 6 determines that the negative pressure state in the simplified airtight housing 4 is abnormal but the anomaly is minor and proceeds to step S4 to reduce an operation output of the system. Specifically, the target value of the power to be generated by the foregoing fuel cell stack 12 is reduced by a predetermined amount, or the maximum value thereof is limited in carrying out the control of the power generated by the fuel cell stack 12 and the control of the PCS 5.

On the other hand, if ΔP ≤ (less than or equal to) P2, then the control unit 6 determines that the anomaly of the negative pressure state in the simplified airtight housing 4 is not minor and proceeds to step S5.

Alternatively, the control unit 6 may determine that the anomaly of the negative pressure state in the simplified airtight housing 4 is not minor and proceed to step S5 if the state in which ΔP > (greater than) P2 lasts for a predetermined time or longer after the operation output of the system is reduced in step S4.

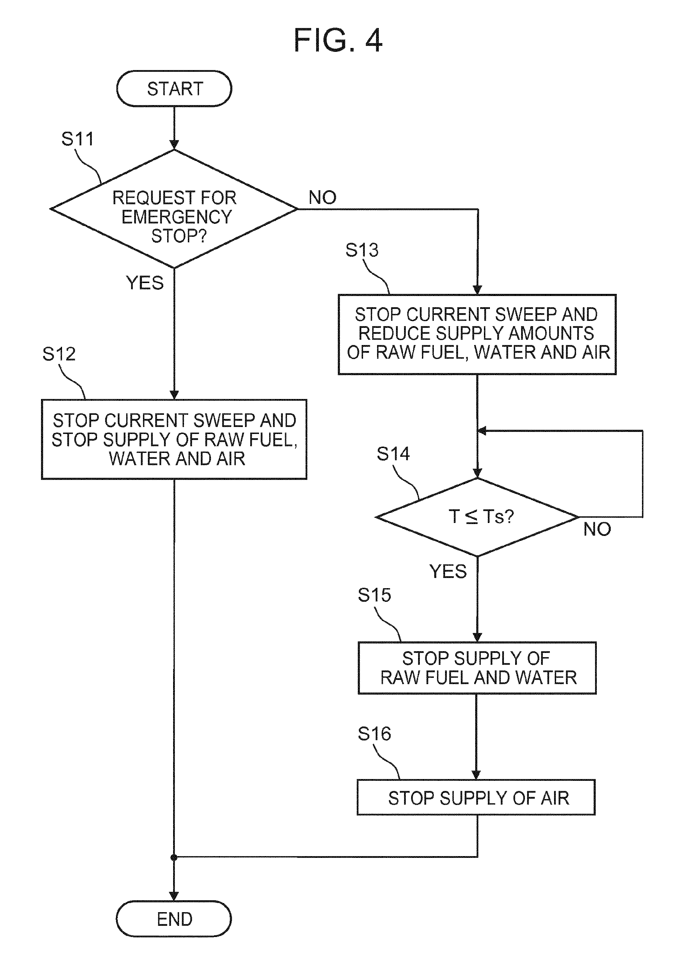

In step S5, the control for stopping the operation of the system illustrated in FIG. 4 is carried out.

FIG. 4 is the flowchart illustrating the control for stopping the operation of the system carried out by the control unit 6.

In step S11, it is determined whether there is a request for an emergency stop of the system or not. The term "emergency stop" used herein means to stop the operation by carrying out a stop control that omits at least some steps of a normal operation stop control. The emergency stop is requested in the case of, for example, an emergency operation stop of the blower 17a.

If it is determined that there is an emergency stop request, then the control unit 6 proceeds to step S12 to carry out the control for an emergency stop of the system. In the emergency stop control, the system is stopped by, for example, immediately and simultaneously stopping current sweep, the supply of the raw fuel and the for-reforming water to the reformer 11, and the supply of air for the cathode to the fuel cell stack 12. At the time of the emergency stop control, the generation of the reformed gas is immediately stopped by the immediate stop of the supply of the raw fuel to the reformer 11. Furthermore, the simultaneous stop described above causes the temperature in the fuel cell module 1 to promptly start going down, so that the volume of the gas in the fuel cell module 1 decreases accordingly. Thus, the air around the fuel cell module 1 (the air in the simplified airtight housing 4) will move in a direction to be drawn into the fuel cell module 1. This makes it possible to restrain the gas remaining in the fuel cell module 1 (e.g., the reformed gas or the anode offgas) from flowing back out through the cathode air supply passage 17 into the simplified airtight housing 4.

On the other hand, if it is determined that there is no request for an emergency stop in step S11, then the control unit 6 proceeds to step S13 to start a normal operation stop control.

In step S13, the current sweep is immediately stopped. Specifically, an instruction is given to the PCS 5 to stop the current sweep. The fuel cell stack 12 is disconnected from the household load. Stopping the generation of power will stop the heat generation in the fuel battery cells 13 themselves.

Furthermore, in step S13, the amounts of the raw fuel and the for-reforming water supplied to the reformer 11 and the amount of the cathode air supplied to the fuel cell stack 12 are reduced.

In step S14, the cell temperature T measured by the foregoing temperature sensor and a predetermined temperature Ts are compared. The predetermined temperature Ts is a temperature at which it is possible to restrain the heat deterioration attributable to the oxidation of the cell supports (not illustrated) or the like of the fuel battery cells 13 even when the fuel supply is stopped (even when a reducing atmosphere is lost), and is set beforehand.

If T > (greater than) Ts, then the control unit 6 returns to step S14 after a predetermined time elapses and continues to measure the cell temperature T and to compare the cell temperature T and the predetermined temperature Ts. At the moment when T ≤ (less than or equal to) Ts, the control unit 6 proceeds to step S15.

In step S15, the supply of the raw fuel and the for-reforming water to the reformer 11 is stopped.

Thereafter, the monitoring of the cell temperature T is continued, and when the cell temperature T reaches room temperature, the supply of the cathode air to the fuel cell stack 12 is stopped (step S16) and the system is stopped.

Patent document 1 describes that the cover of the casing is provided with a cooling pipe for cooling the gasket. Cooling the gasket by using such a cooling pipe may cause a low-temperature region to be formed in the vicinity of the fuel cells, possibly leading to a disturbed heat balance of the fuel cells.

In this respect, according to the present embodiment, no low-temperature region will be formed in the vicinity of the fuel cell stack 12. Hence, a relatively favorable heat balance of the fuel cell stack 12 can be maintained.

According to the present embodiment, the SOFC system (the fuel cell system) is constituted by including: the fuel cell module 1, which includes the fuel cell stack 12 (fuel cells), which causes the reformed gas (hydrogen-containing fuel) and air to react, thereby to generate power, and the casing 10, which surrounds the fuel cell stack 12 and burns therein a surplus reformed gas of the fuel cell stack 12 to maintain the fuel cell stack 12 in a high temperature state; the simplified airtight housing 4 (the first housing), which accommodates the fuel cell module 1; and the blower 17a (the air supply device and the suction device), which draws in air from the inside of the simplified airtight housing 4 to maintain the inside of the simplified airtight housing 4 in the negative pressure state. Thus, the inside of the simplified airtight housing 4 is maintained at a pressure which is lower than that in the surrounding of the simplified airtight housing 4 (the auxiliary machinery compartment 8), so that even if a small amount of an exhaust gas leaks from the fuel cell module 1 into the simplified airtight housing 4, it is possible to restrain the small amount of the exhaust gas from flowing out of the simplified airtight housing 4 (into the auxiliary machinery compartment 8). Thus, the airtightness of the fuel cell module 1 can be eased within a range in which the power generating performance of the fuel cell stack 12 is not affected. Furthermore, the airtightness of the simplified airtight housing 4 can be eased within a range in which the inside of the simplified airtight housing 4 is maintained at a pressure that is lower than that in the surrounding of the simplified airtight housing 4 (the auxiliary machinery compartment 8).

Furthermore, according to the present embodiment, an air layer is formed between the outer surface of the fuel cell module 1 and the inner surface of the simplified airtight housing 4, so that the surface temperature of the simplified airtight housing 4 is lower than the outer surface temperature of the fuel cell module 1. Therefore, in place of the foregoing gasket made of expanded graphite, a member that is less costly and has lower heat resistance (e.g., the rubber grommet G) than the foregoing gasket is used to join the piping or the wiring that penetrate the simplified airtight housing 4.

Furthermore, according to the present embodiment, the blower 17a draws in air from the inside of the simplified airtight housing 4. Thus, the blower 17a mainly draws in the relatively dry air from the inside of the simplified airtight housing 4, so that a relatively favorable mechanical life of the blower 17a can be obtained, as compared with the suction device described in Patent document 2.

Furthermore, according to the present embodiment, the SOFC system is constituted by further including the exhaust gas processing unit 2, which purifies the exhaust gas emitted from the fuel cell module 1, and the simplified airtight housing 4 further accommodates the exhaust gas processing unit 2. With this arrangement, the components, such as carbon monoxide and hydrogen, contained in the exhaust gas from the fuel cell module 1 are subjected to the purification processing in the simplified airtight housing 4, thus permitting the restraint of the components from flowing out of the simplified airtight housing 4 (into the auxiliary machinery compartment 8).

Furthermore, according to the present embodiment, the blower 17a is an air supply device that supplies the air drawn from the inside of the simplified airtight housing 4 to the fuel cell module 1. Therefore, even if a small amount of the exhaust gas leaks from the fuel cell module 1 into the simplified airtight housing 4, the small amount of the exhaust gas is led into the fuel cell module 1 together with the air in the simplified airtight housing 4. This means that there is no need to separately provide equipment, such as piping, for safely discharging the exhaust gas out of the simplified airtight housing 4 and also out of the auxiliary machinery compartment 8 while maintaining the simplified airtight housing 4 in the negative pressure state, thus making it possible to restrain the exhaust gas from leaking out of the simplified airtight housing 4 (the auxiliary machinery compartment 8) without causing the system to become unduly larger.

Furthermore, according to the present embodiment, the blower 17a is an air supply device that supplies the air drawn from the inside of the simplified airtight housing 4 to the air electrodes of the fuel battery cells 13 in the casing 10. This obviates the need for providing an exclusive blower for maintaining the simplified airtight housing 4 in the negative pressure state, so that the inside of the simplified airtight housing 4 can be maintained in the negative pressure state by using the cathode air supply blower 17a without causing an undue increase in the size of the system, thus allowing the system to have a relatively simple construction.

Furthermore, according to the present embodiment, the SOFC system is constituted by further including the SOFC package 7 (the second housing), which accommodates the simplified airtight housing 4. With this arrangement, the auxiliary machinery compartment 8 can be defined and formed around the simplified airtight housing 4, allowing auxiliary machinery to be gathered in the auxiliary machinery compartment 8.

Furthermore, according to the present embodiment, the SOFC system is constituted by further including the intake pipe 43 (communication pipe), which penetrates the SOFC package 7 to provide communication between the inside of the simplified airtight housing 4 and the outside of the SOFC package 7, and the blower 17a is disposed inside the simplified airtight housing 4. With this arrangement, the air outside the SOFC package 7 can be smoothly introduced into the simplified airtight housing 4 through the intake pipe 43, making it possible to restrain undue heat generation of the blower 17a in the simplified airtight housing 4.

Furthermore, according to the present embodiment, the SOFC system is constituted by further including: the pressure difference sensor 4a (the pressure difference measuring unit), which obtains the difference between the internal pressure of the simplified airtight housing 4 and the external pressure of the simplified airtight housing 4 (the difference in pressure ΔP); and the control unit 6, which controls the operation of the SOFC system based on the difference in pressure ΔP obtained by the pressure difference sensor 4a. With this arrangement, if, for example, the negative pressure in the simplified airtight housing 4 starts to decrease (i.e., if the internal pressure of the simplified airtight housing 4 starts to approach the internal pressure of the auxiliary machinery compartment 8) due to the clogging of the filter 17b or a failure of the blower 17a while the blower 17a is in operation, then the change in the negative pressure state in the simplified airtight housing 4 can be promptly grasped and the operation of the system can be controlled accordingly, thus making it possible to control the operation of the system with higher safety while restraining the leakage of the exhaust gas from the simplified airtight housing 4 into the auxiliary machinery compartment 8.

Furthermore, according to the present embodiment, if the difference in pressure ΔP is greater than the first predetermined difference in pressure P1 (ΔP > P1), then the target value of the power to be generated by the fuel cell stack 12 is set according to the demand power of the household load, and the power to be generated by the fuel cell stack 12 is controlled to reach the target value (refer to step S2 in FIG. 3). On the other hand, if the difference in pressure ΔP is greater than the second predetermined difference in pressure P2 , and less than or equal to the first predetermined difference in pressure P1 (P2 < ΔP ≤ P1), then, for example, the target value of the power to be generated by the fuel cell stack 12 is reduced by a predetermined amount and the power to be generated by the fuel cell stack 12 is controlled to reach the reduced new target value (refer to step S4 in FIG. 3). In other words, according to the present embodiment, the control unit 6 decreases the operation output of the SOFC system as the difference in pressure ΔP decreases. Thus, the amount of the exhaust gas produced in the fuel cell module 1 can be reduced when the negative pressure in the simplified airtight housing 4 decreases, so that the leakage of the exhaust gas from the fuel cell module 1 into the simplified airtight housing 4 can be restrained.

Furthermore, according to the present embodiment, if the difference in pressure ΔP decreases to the second predetermined difference in pressure P2 or less (the predetermined threshold value or less), then the control unit 6 stops the operation of the SOFC system (refer to step S5 in FIG. 3, and FIG. 4). Thus, if the negative pressure in the simplified airtight housing 4 considerably decreases, then the control for stopping the operation of the system can be immediately started, so that the leakage of the exhaust gas from the inside of the simplified airtight housing 4 into the auxiliary machinery compartment 8 can be restrained.

In the present embodiment, the intake pipe 43 and the exhaust pipe 44 are constructed to be separate pipes; however, the constructions of the intake pipe and the exhaust pipe are not limited thereto. For example, the intake pipe and the exhaust pipe may be integrally constructed by using a pipelike member having a double-pipe structure composed of an outer pipe and an inner pipe. In this case, by using the space between the outer pipe and the inner pipe as an intake passage and using the space in the inner pipe as an exhaust passage, the pipelike member having the double-pipe structure is capable of restraining the heat of the exhaust gas from being directly transmitted to the outer surface of the pipelike member (the outer pipe).

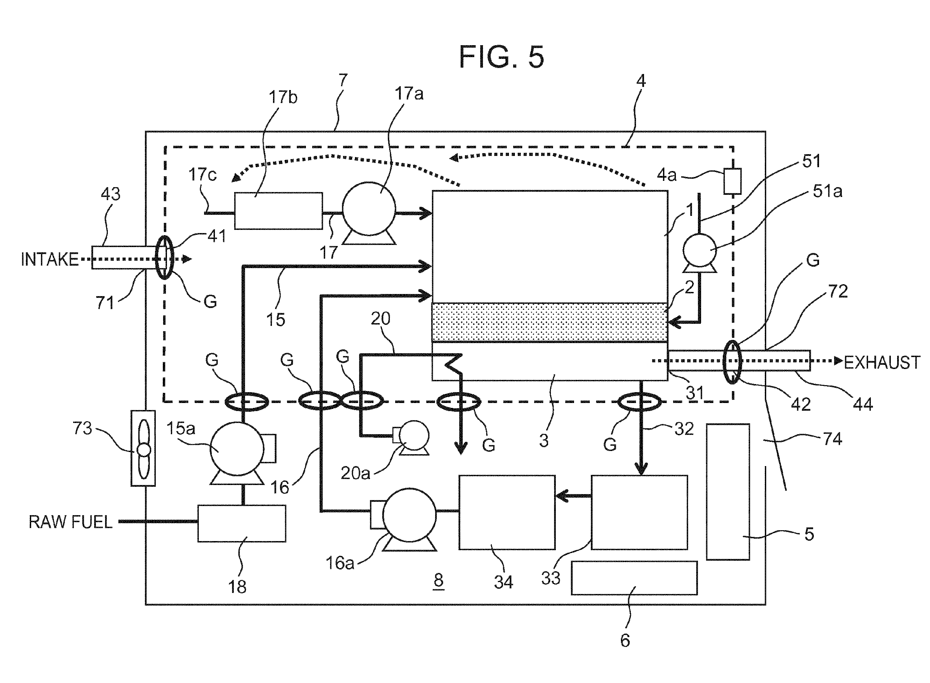

FIG. 5 illustrates the schematic configuration of a SOFC system in a second embodiment of the present invention.

The following will describe aspects that are different from the first embodiment illustrated in FIG. 1.

In the present embodiment, an air intake passage 51 extending from the inside of a simplified airtight housing 4 to an exhaust gas processing unit 2 is provided. One end (the inlet) of the air intake passage 51 is positioned in the simplified airtight housing 4. The other end of the air intake passage 51 is connected to the exhaust gas processing unit 2. The air intake passage 51 is provided with a blower 51 a, which is an air supply device, serving as a device for controlling an appropriate supply amount.

When the blower 51 a is actuated, the blower 51 a draws air from the inside of the simplified airtight housing 4 through the air intake passage 51 and supplies the air to the exhaust gas processing unit 2. Thus, the pressure inside the simplified airtight housing 4 is maintained to be lower than the pressure in the surrounding of the simplified airtight housing 4 (an auxiliary machinery compartment 8). This means that the blower 51 a functions as the suction device in the present invention and is capable of maintaining the inside of the simplified airtight housing 4 in a negative pressure state. Therefore, even if a small amount of an exhaust gas leaks from a fuel cell module 1 into the simplified airtight housing 4, it is possible to restrain the small amount of the exhaust gas from leaking out of the simplified airtight housing 4 (into the auxiliary machinery compartment 8) through an intake hole 41 or a gap between a grommet G and the piping. Furthermore, the small amount of the exhaust gas leaked into the simplified airtight housing 4 is drawn in together with air by the blower 51 a and led into the exhaust gas processing unit 2, and then the components, such as carbon monoxide and hydrogen, in the exhaust gas are subjected to purification processing. Hence, it is possible to restrain the components, such as carbon monoxide and hydrogen, in the small amount of the exhaust gas that has leaked into the simplified airtight housing 4 from being released out of a SOFC package 7 through an exhaust pipe 44.

In the present embodiment, the combined use of a blower 17a and the blower 51 a permits an enhanced negative pressure in the simplified airtight housing 4. Furthermore, the blower 51 a can be operated even if the operation of the blower 17a is stopped. This makes it possible to maintain the inside of the simplified airtight housing 4 in the negative pressure state by the blower 51 a when the operation of the blower 17a is stopped.

According to the present embodiment, in particular, the blower 51 a is an air supply device that supplies the air drawn out of the simplified airtight housing 4 to the exhaust gas processing unit 2. Hence, even if a small amount of the exhaust gas leaks from a fuel cell module 1 into the simplified airtight housing 4, the small amount of the exhaust gas is led into the exhaust gas processing unit 2 together with the air in the simplified airtight housing 4, thus making it possible to restrain the exhaust gas from leaking out of the simplified airtight housing 4 (into an auxiliary machinery compartment 8) and to more effectively purify the small amount of the exhaust gas leaked into the simplified airtight housing 4.

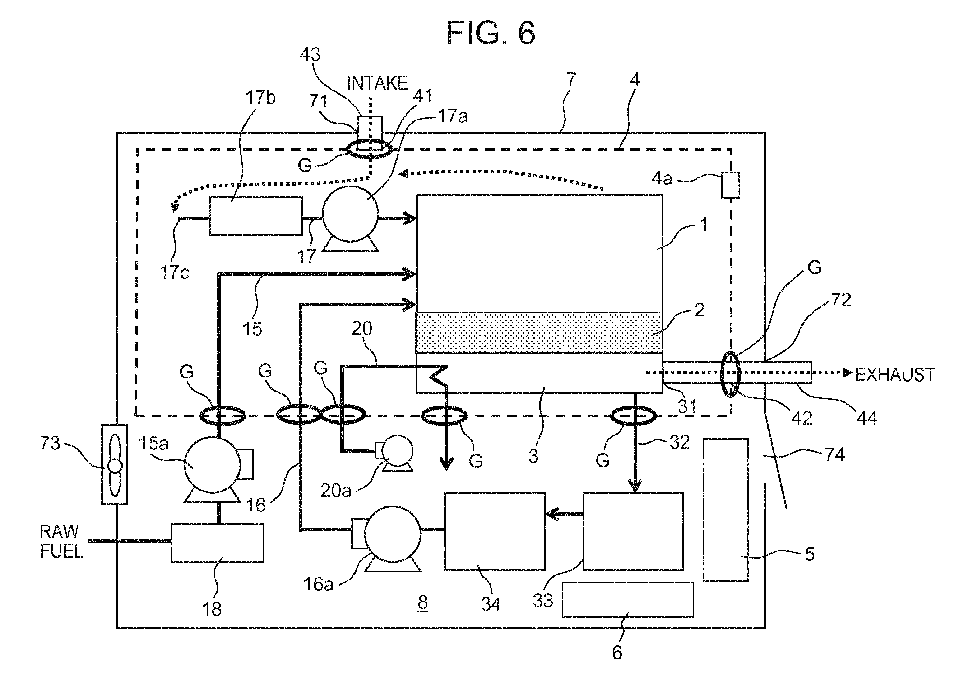

FIG. 6 illustrates the schematic configuration of a SOFC system in a third embodiment of the present invention.

The following will describe aspects that are different from the first embodiment illustrated in FIG. 1.

In the present embodiment, intake holes 41, 71 and an intake pipe 43 are provided in the vicinity of a blower 17a. Furthermore, a cathode air supply passage 17, the blower 17a, and a filter 17b are disposed such that air flowing from the outside of a SOFC package 7 into a simplified airtight housing 4 through the intake pipe 43 passes by the blower 17a and the filter 17b and flows into one end (an inlet 17c) of the cathode air supply passage 17.

According to the present embodiment, in particular, the air directly flowing into the simplified airtight housing 4 through the intake pipe 43 from the outside of the SOFC package 7 passes by the blower 17a and the filter 17b and is led into the inlet 17c of the cathode air supply passage 17 (i.e., the inlet of the blower 17a). Therefore, the air from the outside of the SOFC package 7 cools the blower 17a and the filter 17b and then flows into the cathode air supply passage 17, thus allowing the cathode air to be used for cooling the blower 17a and the filter 17b.

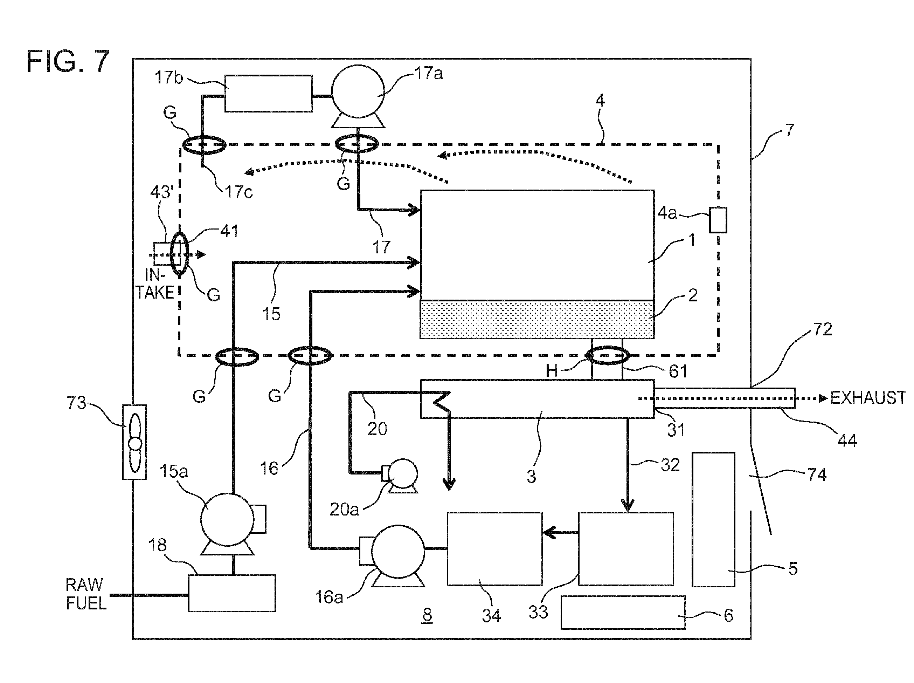

FIG. 7 illustrates the schematic configuration of a SOFC system in a fourth embodiment of the present invention.

The following will describe aspects that are different from the first embodiment illustrated in FIG. 1.

In the present embodiment, a SOFC package 7 does not have the intake hole 71. Furthermore, an intake pipe 43' is provided in place of the intake pipe 43. One end of the intake pipe 43' is connected in an airtight and liquid-tight manner to an intake hole 41 of the simplified airtight housing 4. The other end of the intake pipe 43' is positioned in an auxiliary machinery compartment 8. The intake pipe 43' may be omitted and the air in the auxiliary machinery compartment 8 may be directly led into the simplified airtight housing 4 through the intake hole 41.

In the present embodiment, an intermediate portion of a cathode air supply passage 17, a blower 17a and a filter 17b are positioned in the auxiliary machinery compartment 8. Hence, a portion of the cathode air supply passage 17 that is on the upstream side relative to the filter 17b and a portion thereof on the downstream side relative to the blower 17a are respectively constituted of pipes that penetrate through holes (not illustrated) formed beforehand in the simplified airtight housing 4. The penetrated portions (joins) between the pipes and the simplified airtight housing 4 use, for example, rubber grommets G as the sealing members. Among the pipes constituting the cathode air supply passage 17, the pipe having one end (an inlet 17c) thereof positioned in the simplified airtight housing 4, the intermediate portion thereof penetrating the simplified airtight housing 4, and the other end thereof connected to the intake end of the blower 17a through the intermediary of the filter 17b is referred to as an intake pipe. The intake pipe has a function for leading the air in the simplified airtight housing 4 toward the blower 17a in the auxiliary machinery compartment 8. Furthermore, among the pipes constituting the cathode air supply passage 17, the pipe having one end thereof connected to the discharge end of the blower 17a, the intermediate portion thereof penetrating the simplified airtight housing 4 and the casing 10, and the other end thereof facing the air electrodes of fuel battery cells 13 is referred to as an air supply pipe. The air supply pipe has a function for leading the air discharged from the blower 17a to the air electrodes of the fuel battery cells 13. The air supply pipe may alternatively be configured such that the intermediate portion thereof penetrates the simplified airtight housing 4 and the other end thereof is connected to an exhaust gas processing unit 2 instead of the intermediate portion thereof penetrating the simplified airtight housing 4 and the casing 10 and the other end thereof facing the air electrodes of the fuel battery cells 13.

In the present embodiment, a heat exchanger 3 is disposed in the auxiliary machinery compartment 8. Furthermore, an exhaust gas passage 61 is provided. One end of the exhaust gas passage 61 is connected to the exhaust gas processing unit 2 and the other end is connected to the heat exchanger 3. The exhaust gas passage 61 is constituted of a pipe that penetrates a through hole (not illustrated) formed beforehand in the simplified airtight housing 4. The penetrated portion (join) between the pipe and the simplified airtight housing 4 uses a high temperature gasket H as the sealing member.

An exhaust pipe 44 has one end thereof connected to an exhaust port 31 of the heat exchanger 3 in the auxiliary machinery compartment 8. An intermediate portion of the exhaust pipe 44 passes through an exhaust hole 72 in the SOFC package 7. The other end of the exhaust pipe 44 projects outward from the outer surface of the SOFC package 7. The exhaust pipe 44 may alternatively have one end thereof connected to the exhaust port 31 of the heat exchanger 3 in the simplified airtight housing 4 and the other end thereof connected to the exhaust hole 72 of the SOFC package 7.

According to the present embodiment in particular, one end of the intake pipe 43' is connected to the intake hole 41 of the simplified airtight housing 4, while the other end thereof is positioned in the auxiliary machinery compartment 8. Thus, the air in the auxiliary machinery compartment 8 that has been warmed by the heat generated by auxiliary machinery is preferentially taken into the simplified airtight housing 4 to supply the air to the air electrodes of the fuel battery cells 13. As a result, the capture of outside air into the auxiliary machinery compartment 8 by a ventilation fan 73 is expedited, so that a temperature rise in the auxiliary machinery compartment 8 is restrained, permitting stabilized operations and prolonged life of auxiliary machinery. Furthermore, there is no need to form the intake hole 71 in the SOFC package 7, so that the number of steps for processing the SOFC package 7 can be reduced.

Furthermore, according to the present embodiment, the blower 17a and the filter 17b are disposed in the auxiliary machinery compartment 8 (i.e., outside the simplified airtight housing 4). The temperature in the auxiliary machinery compartment 8 is lower than that in the simplified airtight housing 4. Hence, the blower 17a and the filter 17b can be favorably cooled, as compared with the case in which the blower 17a and the filter 17b are disposed in the simplified airtight housing 4, so that the heat deterioration of the blower 17a and the filter 17b can be restrained.

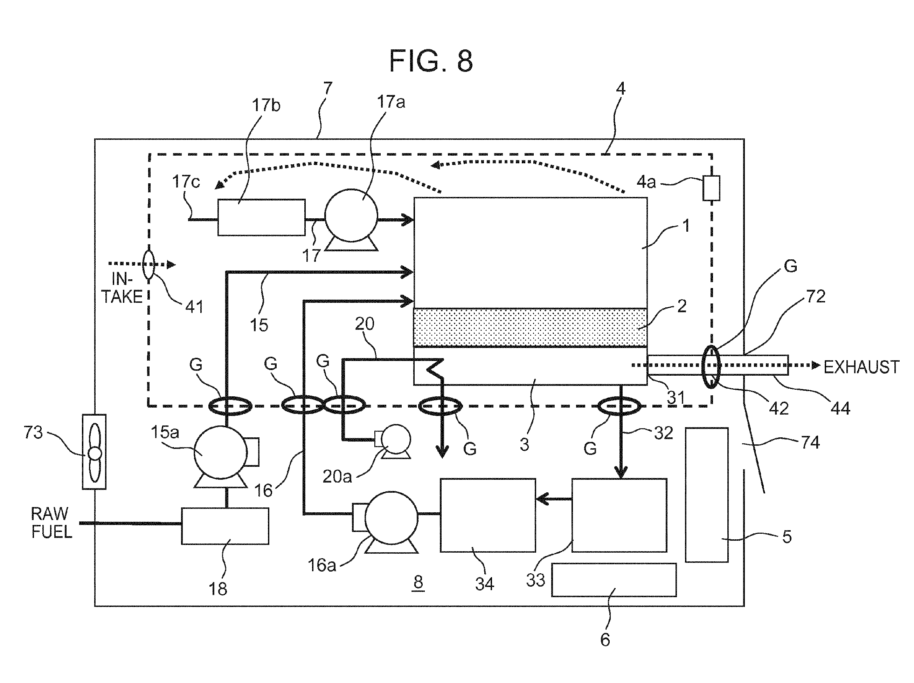

FIG. 8 illustrates the schematic configuration of a SOFC system in a fifth embodiment of the present invention.

The following will describe aspects that are different from the first embodiment illustrated in FIG. 1.

In the present embodiment, a SOFC package 7 does not have the intake hole 71. Furthermore, the intake pipe 43 is omitted. In the present embodiment, therefore, when a blower 17a is operated, the air in an auxiliary machinery compartment 8 directly flows into a simplified airtight housing 4 through an intake hole 41. Hence, in the present embodiment, the air in the auxiliary machinery compartment 8 that has been warmed by the heat generated by auxiliary machinery is preferentially taken into the simplified airtight housing 4 to supply the air to the air electrodes of fuel battery cells 13. As a result, the capture of outside air into the auxiliary machinery compartment 8 by a ventilation fan 73 is expedited, so that a temperature rise in the auxiliary machinery compartment 8 is restrained, permitting stabilized operations and prolonged life of the auxiliary machinery. Furthermore, there is no need to form the intake hole 71 in the SOFC package 7, so that the number of steps for processing the SOFC package 7 can be reduced.

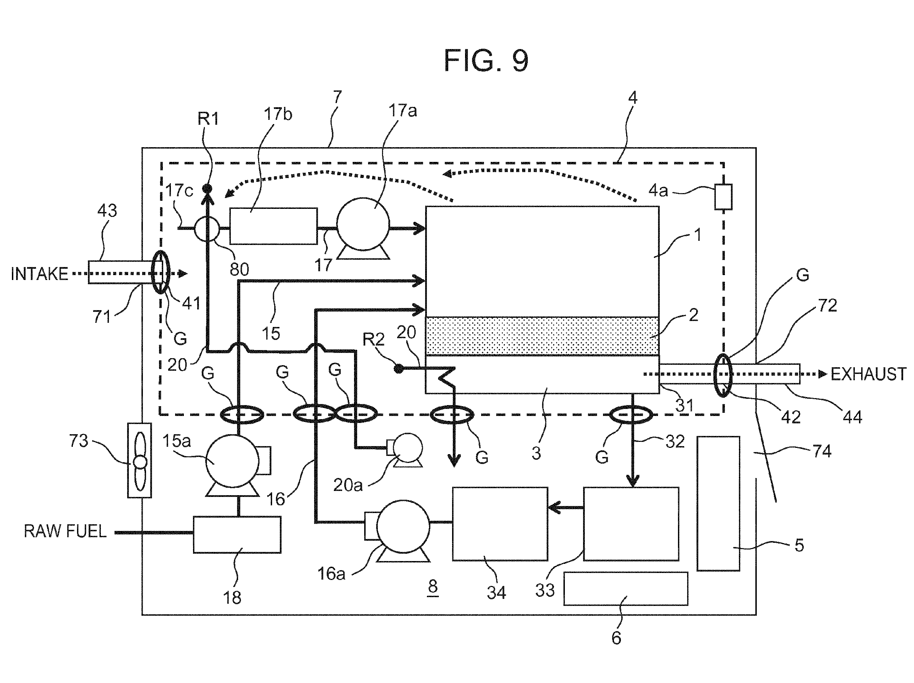

FIG. 9 illustrates the schematic configuration of a SOFC system in a sixth embodiment of the present invention.

The following will describe aspects that are different from the first embodiment illustrated in FIG. 1.

In the present embodiment, a heat medium circulation passage 20 is provided with a heat exchanger 80 at a portion thereof that is located in a simplified airtight housing 4 and on the downstream side relative to the inlet of a heat exchanger 3. A position R1 and a position R2 of the heat medium circulation passage 20 illustrated in FIG. 9 are connected by a pipe, which is not illustrated.

The heat exchanger 80 is positioned between an inlet 17c and a filter 17b in a cathode air supply passage 17.

The heat exchanger 80 carries out heat exchange between a heat medium before flowing into the heat exchanger 3 (i.e., the heat medium before the heat is collected from an exhaust gas) and the cathode air before passing through the filter 17b. The heat exchange cools the cathode air and as a result, the temperature of the cathode air approaches the temperature of the heat medium. In other words, the heat exchanger 80 functions as the cooling device in the present invention and cools the cathode air. Thus, it is possible to restrain the cathode air from exceeding the temperature limits of the filter 17b and the blower 17a, even when a large amount of heat is radiated from a fuel cell module 1 and an exhaust gas processing unit 2, and the air temperature in the simplified airtight housing 4 is high.

According to the present embodiment in particular, the SOFC system (fuel cell system) is constituted by further including the heat exchanger 80 (cooling device) that cools the air in the simplified airtight housing 4 (in the first housing) that is drawn in by the blower 17a (suction device). This makes it possible to restrain the cathode air from exceeding the temperature limits of the filter 17b and the blower 17a, thus permitting prolonged lives of the filter 17b and the blower 17a.

In the present embodiment, the example in which the cathode air is cooled by the heat exchanger 80 (cooling device) using the heat medium, has been described; however, the method for cooling the cathode air is not limited thereto. For example, in addition to or in place of providing the heat medium circulation passage 20 with the heat exchanger 80 as described above, the heat exchanger 80 may be provided at a portion of the for-reforming-water supply passage 16, which portion is positioned in the simplified airtight housing 4. In this case, the cathode air can be cooled by the heat exchanger 80, which carries out the heat exchange between the cathode air and the for-reforming water.

In the first, the second, the fifth, and the sixth embodiments described above, the blower 17a and the filter 17b are disposed in the simplified airtight housing 4. However, in these embodiments, the blower 17a and the filter 17b may be disposed outside the simplified airtight housing 4, and the cathode air supply passage 17 may be constituted by the intake pipe and the air supply pipe described above, as with the foregoing fourth embodiment.

Furthermore, in the first to the third and the sixth embodiment described above, in place of the intake pipe 43, the intake pipe 43', one end of which is connected in an airtight and liquid-tight manner to the intake hole 41 of the simplified airtight housing 4 and the other end of which is positioned in the auxiliary machinery compartment 8, may be provided, as with the foregoing fourth embodiment.

Furthermore, in the second and the third embodiments described above, the SOFC package 7 may not be provided with the intake hole 71 and the intake pipe 43 may be omitted, so that the air in the auxiliary machinery compartment 8 flows directly into the simplified airtight housing 4 through the intake hole 41 when the blower 17a is operated.

Furthermore, in the foregoing sixth embodiment, the cathode air is cooled by the heat exchanger 80. However, this air cooling method may be applied to the second to the fifth embodiments described above to cool the cathode air.

Furthermore, in the first to the sixth embodiments, the descriptions have been given by using the hydrogen-rich fuel gas (reformed gas) generated by the reformer 11 as the hydrogen-containing fuel supplied to the fuel electrodes of the fuel battery cells 13; however, the hydrogen-containing fuel is not limited thereto. For example, pure hydrogen may be used as the hydrogen-containing fuel. In this case, the SOFC system may be constructed by omitting the desulfurizer 18 illustrated in FIG. 1 and FIG. 5 to FIG. 9 and the reformer 11 illustrated in FIG. 2 such that the pure hydrogen is directly supplied to the fuel electrodes of the fuel battery cells 13 from outside the SOFC package 7 through the raw fuel supply passage 15.

Furthermore, in the first to the sixth embodiments described above, the intake hole 41 has been illustrated as the intake part that leads the air outside the simplified airtight housing 4 into the simplified airtight housing 4; however, the configuration of the intake part of the simplified airtight housing 4 is not limited thereto. For example, in the case in which the simplified airtight housing 4 is formed to be shaped like a box by assembling plate-like members, the gaps or the like formed among the plate-like members correspond to the intake part of the simplified airtight housing 4 and allow the air outside the simplified airtight housing 4 to be led into the simplified airtight housing 4.

Furthermore, the illustrated embodiments are merely exemplary of the present invention, and various improvements and modifications made by one skilled in the art within the scope of the appended claims will be apparently embraced in the present invention in addition to those explicitly illustrated by the embodiments that have been described.

### REFERENCE SYMBOL LIST

- 1: Fuel cell module
- 2: Exhaust gas processing unit
- 3: Heat exchanger
- 4: Simplified airtight housing (first housing)
- 4a: Pressure difference sensor (pressure difference measuring unit)
- 5: Power conditioner (PCS)
- 6: Control unit
- 7: SOFC package (second housing)
- 8: Auxiliary machinery compartment
- 10: Casing
- 11: Reformer
- 12: Fuel cell stack
- 13: Fuel battery cell
- 14: Offgas combustion portion
- 15: Raw fuel supply passage
- 15a: Pump
- 16: Supply passage of water for steam reforming (for-reforming water)
- 16a: Pump
- 17: Cathode air supply passage
- 17a: Blower (air supply device, suction device)
- 17b: Filter
- 17c: Inlet
- 18: Desulfurizer
- 19: Reformed gas supply passage
- 20: Heat medium circulation passage
- 20a: Pump
- 31: Exhaust port
- 32: Condensed water recovering passage
- 33: Recovered water processing unit
- 34: Water tank
- 41: Intake hole
- 42: Exhaust hole
- 43: Intake pipe (communication pipe)
- 43': Intake pipe
- 44: Exhaust pipe
- 51: Air intake passage
- 51a: Blower (air supply device, suction device)
- 61: Exhaust gas passage
- 71: Intake hole
- 72: Exhaust hole
- 73: Ventilation fan
- 74: Ventilation hole
- 80: Heat exchanger (cooling device)
- G: Grommet
- H: Gasket

## Claims

1. A fuel cell system comprising:
a fuel cell module that includes fuel cells that cause a hydrogen-containing fuel and air to react, thereby to generate electricity, and a casing that surrounds the fuel cells and maintains the fuel cells in a high temperature state by burning therein a surplus hydrogen-containing fuel of the fuel cells;
a first housing that accommodates the fuel cell module; and
a suction device that draws in air from the inside of the first housing so as to maintain the inside of the first housing in a negative pressure state.

2. The fuel cell system according to claim 1, further comprising:
an exhaust gas processing unit that purifies an exhaust gas discharged from the fuel cell module,
wherein the first housing further accommodates the exhaust gas processing unit.

3. The fuel cell system according to claim 2, wherein the suction device is an air supply device that supplies the air drawn in from the inside of the first housing to at least one of the fuel cell module and the exhaust gas processing unit.

4. The fuel cell system according to claim 1, further comprising a second housing that accommodates the first housing and the suction device.

5. The fuel cell system according to claim 1, further comprising a cooling device that cools the air, which is drawn in by the suction device, in the first housing.

6. The fuel cell system according to claim 1, further comprising:
a pressure difference measuring unit that obtains a difference between an internal pressure of the first housing and an external pressure of the first housing; and
a control unit that controls the operation of the fuel cell system based on a pressure difference obtained by the pressure difference measuring unit.

7. The fuel cell system according to claim 6, wherein the control unit reduces an operation output of the fuel cell system as the pressure difference decreases.

8. The fuel cell system according to claim 6, wherein the control unit stops the operation of the fuel cell system in a case in which the pressure difference decreases to a predetermined threshold value or less.

9. The fuel cell system according to claim 4, further comprising:
a communication pipe that penetrates the second housing to provide communication between the inside of the first housing and the outside of the second housing,
wherein the suction device is disposed in the first housing.

10. The fuel cell system according to claim 1,
wherein the suction device is disposed outside the first housing, and
wherein the fuel cell system further comprises an intake pipe that penetrates the first housing and leads the air in the first housing to the suction device.
